# EUROPEAN PATENT SPECIFICATION

(11) **EP 0 751 291 B1**
(45) Date of publication and mention of the grant of the patent: **26.09.2001**
(21) Application number: 96108789.7
(22) Date of filing: 31.05.1996
(51) Int. Cl.: F02D 41/36, F02M 69/04, F02B 33/04, F02B 33/30, F02M 61/18, F02M 69/10

(54) **Internal combustion engine and method of providing same with fuel**
Brennkraftmaschine und Brennstoffversorgungsverfahren der Brennkraftmaschine
Moteur à combustion interne et méthode d'alimentation de carburant de celui-ci

(30) Priority: 31.05.1995 JP 15716195
(43) Date of publication of application: 02.01.1997
(73) Proprietor: YAMAHA HATSUDOKI KABUSHIKI KAISHA, Iwata-shi Shizuoka-ken, 438 (JP)
(72) Inventor: Yoshida, Takeo, c/o Yamaha Hatsudoki K.K., Iwata-shi, Shizuoka-ken (JP); Suzuki, Takahiro, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- WO-A-87/00575
- WO-A-91/10058
- US-A- 4 941 441
- US-A- 5 038 739
- US-A- 5 107 810

## Description

This invention relates to an Internal combustion engine of the two-stroke cycle type comprising at least one cylinder covered with a cylinder head and accommodating a slidably reciprocatable piston connected via a connecting rod to a crankshaft which is located in a crank chamber, whereas said cylinder, said piston and said cylinder head define a combustion chamber, further a scavenging passage, an exhaust passage, and a fuel injection device for injecting fuel into said cylinder, a control device adapted to control the operation of said fuel injection device such that at least during a low load range of said engine injection of fuel is interrupted at least during one revolution of said crankshaft, said piston comprises at least one ring groove for accommodating at least one piston ring.

Such an internal combustion engine is known from US-A-5 038 739. This document discloses a control device being adapted to control the operation of the fuel injection device such that, at least during a low load range of the engine, injection of fuel is interrupted at least during one revolution of the crankshaft.

Moreover, document WO 87/00575 A discloses an internal combustion engine of the two-stroke cycle type in which the fuel injector as well as the scavenging and exhaust ports are located in the side wall of the cylinder. Fuel injection end at 298° CA after TDC (thus "A" ≈ 0,27L).

However, gas exchange is not carried out perfectly by scavenging at low speeds, and residual exhaust gas mixes in the fresh air. As a result, even if a specified amount of fuel is supplied by injection into the combustion chamber and ignited, mixture concentration in the combustion chamber is out of combustible range and misfires, or so-called irregular combustion occurs. Misfire causes fuel to be exhausted as it is during the exhaust stroke and fuel economy becomes poor.

With internal combustion engines in which gas exchange is not easy, the ratio of the residual exhaust gas in the fresh air cannot be lowered by gas exchange of a single misfire and the misfire may occur continuously. In that case, fuel is continuously supplied during continued misfire, and the fuel economy becomes poorer.

With internal combustion engines in which gas exchange is not easy, the reduction rate in the amount of the residual exhaust gas mixed in the fresh air varies for every gas exchange at the time of misfire, the number of cycles to the next ignition and combustion varies irregularly, and the revolution varies irregularly. As a result, problems occur such as adverse effect on the load and strong vibration of supporting members of drive system from the engine to the load.

Accordingly, it is an objective of the present invention to provide an improved internal combustion engine of the two-stroke cycle type with fuel as indicated above which facilitate a reduction of the probability of irregular combustion, a smooth operation, and the improvement of fuel economy at low speeds.

According to the present invention, this objective is solved for an internal combustion engine of the two-stroke cycle type as indicated above in that said fuel injector is located within a cylinder side wall at a first distance A to a top end of a cylinder body and in that the following inequation is fulfilled: RS < A < 0.3L, wherein RS is a second distance between said top end of said cylinder body and the lower end of said ring groove of said piston when it is at the top dead center position and L is a third distance between said top end of said cylinder body and the top circumference of said piston when it is in the bottom dead center position.

According to an advantageous embodiment of the present invention, said internal combustion engine comprises an engine control device for controlling said injector on the basis of detected engine operating conditions which may be one or a combination of a crank angle, a crankcase inside pressure, a cylinder inside pressure, knocking of the engine, intake air temperature, the throttle opening, an intake pressure, a cylinder temperature, an atmospheric pressure, a coolant temperature and an engine speed

In case said internal combustion engine comprises at least one exhaust port and at least one scavenging port opposing each other, it is advantageous when a fourth distance ES between said top end of said cylinder body and said exhaust port fulfils the following inequation: 0.35 ES < A < 0.65 ES.

According to a preferred embodiment of the present invention, said control device is adapted to control said fuel injection device such that said fuel injection is interruptable according to a pattern.

According to an embodiment not according to the invention, at low speeds after one injection at least one injection of the next cycle is interrupted, which one cycle being assumed from the uncovering and covering to the next opening of the exhaust port, so that fuel injection is made irregular, misfire is caused to occur while fuel supply is stopped, and blowby at the time of misfire is prevented. Therefore, residual exhaust gas amount is reduced.

According to another embodiment not according to the invention, after the injection, since injections are stopped for a specified number of cycles so that fuel supply is reduced or stopped for the specified number of cycles, residual exhaust gas amount is securely reduced. Therefore, combustion is sure to occur once the fuel is injected and ignited.

According to a further embodiment not according to the invention, one injection pattern is continuously carried out, the one injection pattern comprising the specified number of cycles only for which injections are carried out. Since the injection pattern is regularly continued, the revolution of the internal combustion engine is made regular.

According to still another embodiment not according to the invention, since injection is carried out for every cycle in a high revolution zone where the engine revolution is not less than a specified value and/or a high load zone, stabilized, large output is possible.

Other preferred embodiments of the present invention are laid down in further dependent claims.

In the following, the present invention is explained in greater detail with respect to several embodiments thereof in conjunction with the accompanying drawings, wherein:
FIG. 1 shows schematically an embodiment of a fuel injection internal combustion engine in an outboard motor.
FIG. 2 is a flow chart for fuel and air for the cylinder side wall injection.
FIG. 3 shows a vertical cross section of an upper part of one cylinder of a fuel injection internal combustion engine.
FIG. 4 shows a cross section of an exhaust system.
FIG. 5 is a plan view of a fuel injection internal combustion engine.
FIG. 6 shows schematically an embodiment of a fuel injection internal combustion engine in a motorcycle.
FIG. 7 shows a vertical cross section, of a two cycle spark ignition internal combustion engine.
FIG. 8 is a flow chart for fuel and air for the cylinder side wall
FIG. 9 shows a cross section of an injector.
FIG. 10 shows a cross section of the tip portion of the injector.
FIG. 11 is a timing chart of fuel injection.
FIG. 12 shows a schematic cross section of fuel injection from the injector.
FIG. 13 shows a schematic cross section of fuel injection from the injector.
FIG. 14 shows position and size of the injection holes of the injector.
FIG. 15 shows injection timing of a two cycle spark ignition internal combustion engine in a low load, low speed zone.

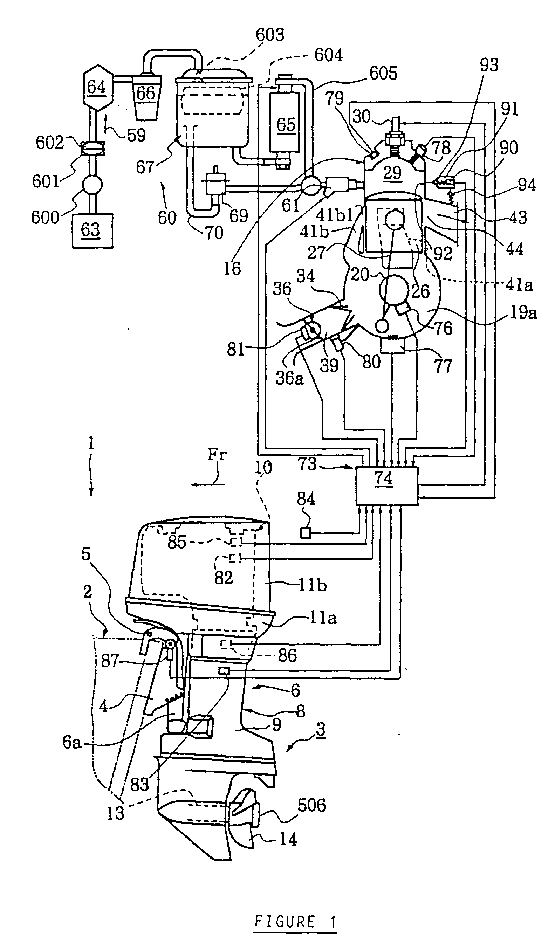

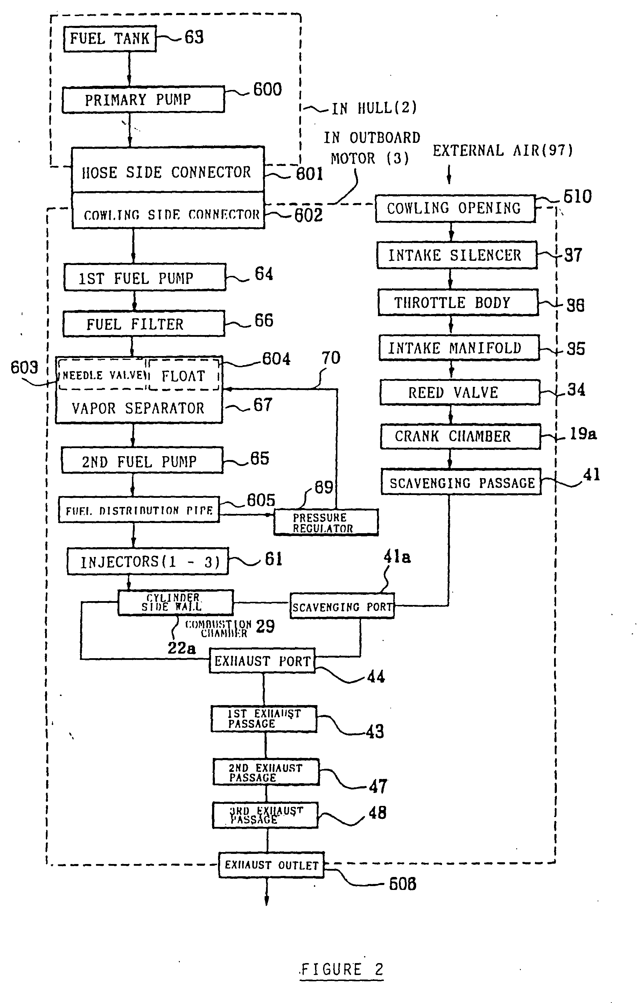

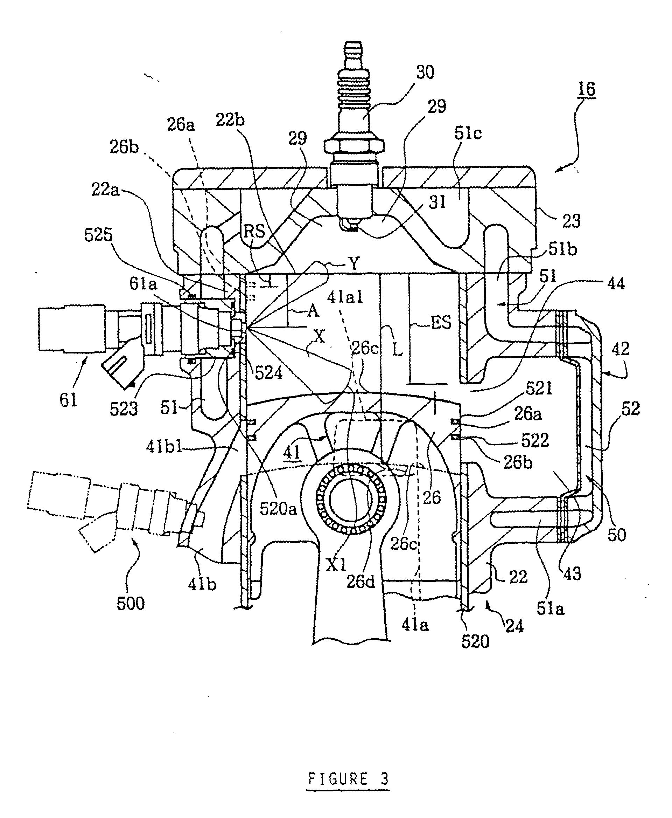

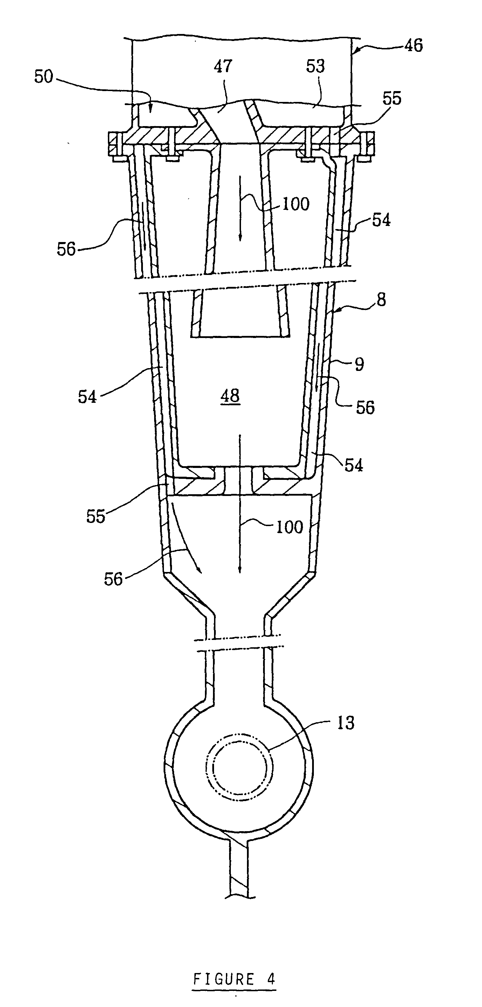

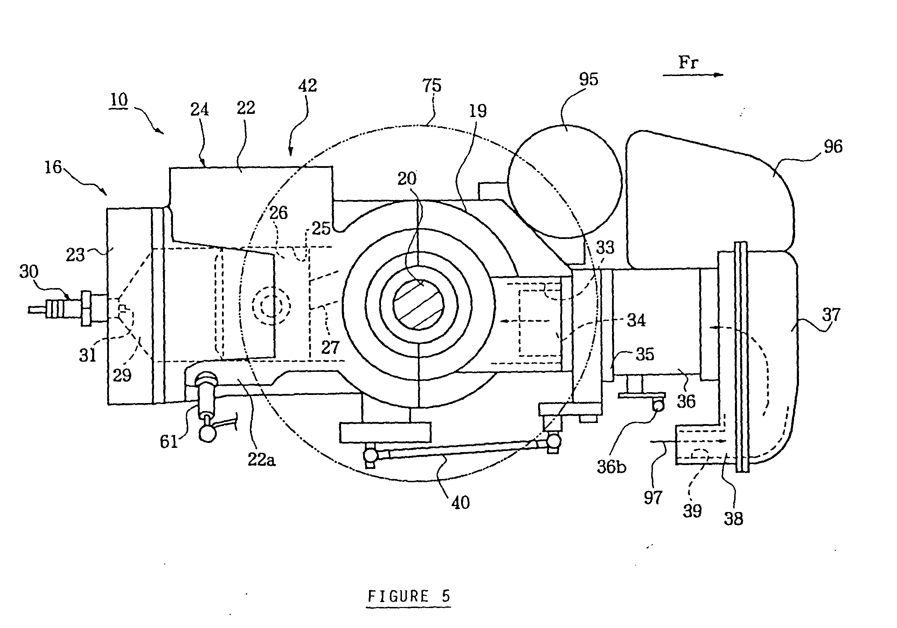

A fuel injection device as an embodiment of this invention for two cycle spark ignition internal combustion engines will be described in reference to appended drawings. FIGs. 1 through 5 show an embodiment of a two cycle spark ignition internal combustion engine as an outboard motor. FIG. 1 is a schematic view of the two cycle spark ignition internal combustion engine as an outboard motor. FIG. 2 is a flow chart of fuel and air with cylinder side wall injection. FIG. 3 shows a cross section of the upper portion of the two cycle spark ignition internal combustion engine. FIG. 5 is a plan view of the two cycle spark ignition internal combustion engine.

FIG. 1 shows a vessel (1) as a vehicle with the arrow (Fr) showing the direction of advancing. The words right and left used later herein mean the directions as seen in the advancing direction described above. The vessel (1) has a hull (2) with its stern mounted with a detachable outboard motor (3). The outboard motor (3) comprises a bracket (4) mounted on the stern, and an outboard motor proper (6) pivoted with a pivot shaft (5) (arranged in the direction normal to the Fr direction) relative to the bracket (4). The outboard motor proper (6) is provided with a power transmission device (8) which in turn comprises a transmission case (9) constituting the outer shell of the power transmission device (8) and a transmission mechanism housed in the transmission case (9). The transmission case (9) is pivoted for swinging about a vertical pivot shaft (not shown) provided generally vertically on a swivel bracket (6a) which constituted the outboard motor proper (6) pivoted with the pivot shaft (5) relative to the bracket (4). The outboard motor proper (6) is also provided with a two cycle engine (10) of a fuel injection type. The engine (10) is detachably mounted on the top end of the transmission case (9) with its under side covered with a cover (11a) and its upper side covered with a cover (11b) which can be opened and closed as required. The transmission case (9) extends downward into the water. At the lower end of the transmission case (9) is supported a shaft (not shown) extending horizontally and a propeller (14) is mounted on the shaft. The propeller (14) is connected through the transmission mechanism of the power transmission device (8) for interlocked movement with the engine (10). An exhaust passage (13) sends exhaust gas to the propeller (14).

An engine (10) comprises a single cylinder (16), a crankcase (19), and a cylinder body (22). A crankshaft (20) with its axis generally vertical is housed and supported in the mating area between the crankcase (19) and the cylinder body (22) for free rotation about the axis. To the rear of the crankcase (19) is attached the cylinder body (22) of the single cylinder (16) to form a single body. To the projecting end of the cylinder body (22) is attached a detachable cylinder head (23). The cylinder body (22) constitutes a cylinder block (24).

The cylinder body (22) has a cylinder bore (25) into which a piston (26) is inserted for free sliding back and forth. The piston (26 is connected through a connecting rod (27) to the crankshaft (20). The space surrounded with the cylinder head (23) and the piston (26) in the cylinder bore (25) corresponds to the "cylinder inside" which becomes a combustion chamber (29) when the piston (26) approaches the cylinder head (23) to a certain extent. The cylinder head (23) is provided with an ignition plug (30), corresponding to the combustion chamber (29), with its discharging portion (31) facing the combustion chamber (29).

A crank chamber (19a) is formed with the cylinder block (24) and the crankcase (19).

On the front side of the crankcase (19) is formed a intake port (33) connected to the crank chamber (19a) and is provided with a reed valve (34). In front of the reed valve (34) are connected an intake manifold (35), a throttle body (36) housing a throttle valve (36a), and an intake silencer (37) in succession in that order. The top end of the intake silencer (37) is provided with an inlet duct (38) opening to the rear so as to take in air from a cowling opening (510). The inlet duct (38), intake silencer (37), throttle body (36), intake manifold (35), and reed valve (34) are connected to each other through intake passages (39) formed respectively in those components. The intake passages (39) are connected to the intake port (33). Throttle lever (36b) provided on the throttle body (36) is connected together with interlocking means (40) so that the throttle valve (36a) is interlocked to perform opening and closing movements together with the throttle lever (36b) when an operating mechanism is operated by an operator.

The cylinder body (22) around the cylinder bore (25) is provided with a scavenging passage (41). The scavenging passage (41) is constituted with two main scavenging passages (41a) each having a scavenging port (41a1) opening to the cylinder bore (25) and a sub-scavenging passage (41b)having a scavenging port (41b1). The scavenging ports (41a1) are located at opposing positions, and an exhaust port (41b1) of the exhaust passage (41b) is located to oppose an exhaust port (44). These exhaust passages (41) make internal connections between the crankcase (19) and the combustion chamber (29).

To the left side of the cylinder block (24) is attached an exhaust manifold (42). One end of a first exhaust passage (43) in the exhaust manifold (42) leads through an exhaust port (44) formed in the cylinder body (22) to a combustion chamber (29). On the other hand, an exhaust guide (46) is interposed between the cylinder block (24) and the transmission case (9). A second exhaust passage (47) of the exhaust guide (46) is connected to the other end of the first exhaust passage (43). A third exhaust passage (48) is formed in the transmission case (9). One end of the third exhaust passage (48) is connected to the second exhaust passage (47) and the other end of the third exhaust passage (48) is a cylindrical exhaust passage (13) connected to an exhaust passage in the propeller (14). The end of the exhaust passage is open as a discharge port (506) into the water.

The engine (10) is provided with a cooling device (50) of a water-cooled type. The cooling device (50) comprises a first water cooling jacket (51) formed for the cylinder head (23) and the cylinder block (24), a second cooling water Jacket (52) formed for the exhaust manifold (42), a third cooling water jacket (53) formed for the exhaust guide (46) so as to surround the second exhaust passage (47), and a fourth cooling water jacket (54) formed for the transmission case (9) so as to surround the third exhaust passage (48), and those cooling water jackets (51 - 54) are connected to each other either directly or through a plurality of cooling water connection passages (55). The lower end of the fourth cooling water jacket (54) is connected to the downstream side of the third exhaust passage (48).

A water pump is provided for supplying cooling water (56) such as sea water to the first cooling water jacket (51). The cooling water (56) passes through; the outer portion (51a), surrounding the exhaust manifold, of the first cooling water jacket (51); the second cooling water jacket (52); the outer portion (51b), surrounding the upper part of the cylinder, in the the first cooling water jacket (51); the cylinder head portion (51c) in the the first cooling water jacket (51), the cooling water jackets (53, 54), and the downstream end of the third exhaust passage (48), and discharged into the water. As the cooling water flows, the cylinder 16 is cooled.

The engine (10) is provided with a fuel supply device (60) for supplying fuel (59).

A fuel supply device (60) comprises an injector (61) corresponding to the cylinder (16). The injector (61) is detachably mounted on a cylinder side wall (22a) of the cylinder body (22) to inject fuel (59) appropriately from the cylinder side wall (22a) into the combustion chamber (29).

The injector (61) is provided with a first fuel pump (64) and a second fuel pump (65) in series. The first fuel pump (64) is operated by pressure pulsation in the crankcase (19a) to draw fuel (59) in a fuel tank (63) in the hull (2), and sends the fuel (59) to a vapor separator (67) which is a fuel storage (small tank) in the outboard motor (3). The second fuel pump (65) pressurizes and supplies fuel (59) at the vapor separator (67).

A primary pump (600) is interposed between the fuel tank (63) and the first fuel pump (64). The primary pump (600) and the first fuel pump (64) are interconnected through a hose side connector (601) and a cowling side connector (602). The primary pump (600) is for manually supplying fuel before starting.

A fuel filter (66) and the vapor separator (67) are interposed in series between the first fuel pump (64) and the second fuel pump (65). In the vapor separator (67) are provided a needle valve (603) and a float (604). When the level of fuel (59) in the vapor separator (67) lowers and the float (604) lowers to a certain level or below, the needle valve (603) opens to supply fuel (59) from the fuel tank (63) side. The second fuel pump (65) supplies fuel (59) through a fuel supply pipe (605) to each injector (61). The fuel supply pipe (605) is provided with a pressure regulator (69) for use in the adjustment of the pressure of fuel (59) supplied to the injector (61). Fuel not injected is returned through a fuel passage (70) to the vapor separator (67) located on the upstream side of the second fuel pump (65). Tiny bubbles of fuel vapor or air mixed in the fuel are separated with the vapor separator (67).

The Injector (61) is of an electromagnetic type, and when it is energized (or de-energized), fuel (59) is injected into the combustion chamber (29) for that period. Of the components of the fuel supply device (60), those from the fuel tank (63) to the hose side connector (601) are located in the hull (2), and others constitute the outboard motor (3).

FIG. 1 shows an engine control device (73) for controlling the engine (10). The engine control device (73) is provided with an electronic control unit (74) and connected electrically to the ignition plug (30) functioning as actuators, the injectors (61), and the second fuel pump (65). A flywheel magneto (75) is attached to the top end of the crankshaft (20) for supplying electric power to the control unit (74) directly or through a battery.

Various sensors for detecting the operating state of the engine (10) are provided and electrically connected to the control unit (74). Such sensors are; a crank angle sensor (76) for detecting a reference crank angle and rotation angle of the crankshaft (20), crankcase inside pressure sensor (77) for detecting the pressure inside the crankcase (19), a cylinder inside pressure sensor (78) for detecting the pressure inside the cylinder (16), a knocking sensor (79) for detecting the state in the cylinder (16), an intake air temperature sensor (80) for detecting the temperature in the intake passage (39), and a throttle opening sensor (81) for detecting the degree of opening of a throttle body (36). An intake pressure sensor may be also provided for detecting the pressure of the intake passage (39).

There are also provided; a cylinder temperature sensor (82) for detecting the temperature of the cylinder body (22), a back pressure sensor for detecting the pressure on the upstream side in the third exhaust passage (48), an atmospheric pressure sensor (84) for detecting the atmospheric pressure, a cooling water temperature sensor (85) for detecting the temperature of cooling water (56); a shift sensor (86) for detecting forward, neutral, and reverse shifting operations and shifted states of the power transmission device (8); and a trim angle sensor (87) for detecting up and down rotated positions of the outboard motor (3) about the pivot shaft (5).

The cylinder (16) is also provided with an O₂ sensor (90) disposed in a sensor holding chamber (91). When the piston (26) moves down and passes a relief valve hole (92) in the cylinder side wall (22a), a relief valve (93) is opened by exhaust gas pressure, and exhaust gas enters the sensor holding chamber (91). The O₂ sensor (90) detects the concentration of O₂ in exhaust gas, and according to the detected value, calculates air to fuel ratio in the combustion chamber (29). The exhaust gas in the sensor holding chamber (91) passes through a check valve (94) and is exhausted to the first exhaust passage (43). The engine (10) is also provided with a starter (95) and an oil tank (96).

During operation of the engine (10), as the piston (26) in the cylinder (16) moves from the bottom dead center on the crankshaft (20) side toward the combustion chamber (29), scavenging ports (41a1) and (41b1) of the scavenging passage (41) and the exhaust port (44) of the first exhaust passage (43) are covered in succession.

When the piston (26) moves toward the combustion chamber (29) as described above, the pressure in the crank chamber (19a) in the crankcase (19) becomes negative. Then, the pressures on the reed valve (34), the intake passage (39) in the intake port (33), intake manifold (35), throttle body (36), and the intake silencer (37) become negative in succession. As a result, external air (97) is drawn from the intake port (33) into the intake passage (39) and into the crank chamber (19a) in the crankcase (19). This process is the "intake stroke."

When the piston (26) further moves toward the combustion chamber (29) after the scavenging ports (41a1) and (41b1) of the scavenging passage (41) and the exhaust port (44) of the first exhaust passage (43) are covered, the mixture already taken in the combustion chamber (29) is compressed. This process is the "compression stroke."

Immediately before the piston (26) reaches the top dead center, the mixture is ignited with an electric discharge of the discharging portion (31) of the ignition plug (30) controlled with the engine control device (73), burns and expands to push back the piston (26) toward the crankshaft (20) when the piston goes beyond the top dead center. This process is the "combustion stroke."

As the piston (26) moves toward the crankshaft (20), the air taken into the crank chamber (19a) of the crankcase (19) is pre-compressed. By the way, the reed valve (34) is closed by the pressure prevailing at this time. In the middle of the movement of the piston (26) toward the crankshaft (20), first the exhaust port (44) is uncovered. Then, burned product of the mixture or exhaust gas (100) is discharged through the exhaust port (44). This process is the "exhaust stroke."

The exhaust gas (100) is exhausted through the first exhaust passage (43), second exhaust passage (47), third exhaust passage (48), and exhaust passage (13) into the water. In this case, the cooling water (56) after cooling the cylinder (16) runs through the fourth cooling water jacket (54) and the cooling water connecting passage (55) and is exhausted together with the exhaust gas (100) into the water described above.

As the piston (26) moves toward the crankshaft (20) and the exhaust port (44) is uncovered, next, the scavenging port (41) is opened. Then, the air taken in and pre-compressed as described above is made to flow through the scavenging passage (41) into the combustion chamber (29). This intake air pushes out part of the burned gas remaining in the combustion chamber (29) to the first exhaust passage (43). This process is the "scavenging stroke." Since the scavenging stroke begins In the middle of the exhaust stroke, and the exhaust stroke is over in the middle of the scavenging stroke, the two strokes are also called collectively as the scavenging exhaust stroke. After that, the piston (26) returns to the bottom dead center. Fuel is injected from the injector (61) during the period from the middle of the scavenging stroke to the early period of the compression stroke.

In this case, part of the air which has flowed through the scavenging passage (41) into the combustion chamber (29) blows out to the first exhaust passage (43) side, mixes with burned gas and exhausted as the exhaust gas (100). On the other hand, the rest of the burned gas which has not been exhausted mixes with fresh intake. From that state, the piston (26) moves again toward the combustion chamber (29) side, and the steps described above are repeated so that the crankshaft (20) is rotated. By the way, the injection is carried out after the blow out is stopped. Through the crankshaft (20), the engine outputs a power to rotate the propeller (14) through the power transmission device (8) and drive forward the vessel (1) as an object to be driven.

In FIG. 3, the piston (26) is arranged for sliding in a sleeve (520) and formed with a first ring groove (26a) and a second ring groove (26b) over and under respectively, and with a first piston ring (521) and a second piston ring (522) respectively fit therein. The cylinder side wall (22a) is provided the injector (61) through a cap (523). The front and rear sides of the cap (523) are sealed with seal members (524) and (525), respectively. The tip portion (61a) of the injector (61) is mounted to face an opening (520a) of the sleeve (520) and the mounting position is determined as described below.

The injector (61) is disposed in a half zone in the circumferential direction of the cylinder wall (22a) opposite the exhaust port (44) and nearer to the cylinder head (23) than to the exhaust port (44) in the longitudinal direction of the cylinder.

When it is assumed that; the distance between the top end (22b) of the cylinder and the mounting position of the injector is (A), the distance between the top end (22b) of the cylinder and the piston top circumference when the piston is at the bottom dead center is (L), and the distance between the top end (22b) of the cylinder and the lower end of the first ring groove (26a) in which the first piston ring (521) is fit is (RS), a relationship holds as RS < A < 0.3L.

Also, when it is assumed that the distance between the top end (22b) of the cylinder and the exhaust port (44) is ES, a relationship holds as 0.35ES < A < 0.65ES.

By mounting the injector (61) to a specified position as described above. a longer zone in which injection is possible may be secured in comparison with the conventional arrangement while lowering heat load on the injector by the piston (26) at an early period of the combustion stroke.

Two, upper and lower fuel injections are made from the injector (61), with the downward directed injection flow (X) directed to the piston head (26c) which is moving up from the bottom dead center to the top dead center, and with the upward directed injection flow (Y) directed to the ignition plug (30). While the downward directed injection flow (X) cools the piston head (26c), evaporation of the fuel itself is accelerated. However, if there is only the downward directed injection flow (X), mixture near the ascending piston head (26c) becomes rich while mixture in the upper portion of the combustion chamber (29) becomes lean. The upward directed injection flow (Y) functions to make mixture in the entire combustion chamber (29) as uniform as possible and to make combustion smooth.

At the time of starting or when the load is low, the piston temperature is low, the throttle valve opening is small and the gas flow in the cylinder caused by scavenging is less active. Therefore, mixture cannot be made uniform across the entire combustion chamber (29) with only one of the injection flows (X) and (Y). However, since mixture is made uniform by the two injection flows (X) and (Y), smoother combustion is possible.

Since combustible mixture is securely produced by the upward directed injection flow (Y) at the time of start around the ignition plug (30), ease of start is improved.

The injection velocity of the fuel injected from the injector (61) into the combustion chamber (29) is set to 10 m/s - 30 m/s. That is to say, the flow velocity of the injection flows (X) and (Y) are set to 10 m/s - 30 m/s. The so-called penetration force of the injection flows (X) and (Y) is set low within the range required for the fuel diffusion. The fuel pressure is also set low.

The pressure in the upstream portion of the injection hole at the time of fuel injection from the injector (61) into the combustion chamber (29) is set to 300 kPa - 1000 kPa.

By setting the injection velocity of the fuel injected from the injector (61) into the combustion chamber (29) to 10 m/s - 30 m/s as described above, after the injection a sufficient period of time is secured for the fuel to reach the piston head (26c), and vaporization of fuel is accelerated. Furthermore, fuel is prevented from finding its way into the exhaust port (44) even if fuel is injected prematurely.

Furthermore, since the injection flow (X) directed to the piston head (26c) is not so slow as to be disturbed by the tandem flow caused by the scavenging flow in the cylinder, heat exchange is possible on the piston head (26c), and vaporization of fuel is accelerated.

It is also possible to set the pressure in the upstream portion of the injection hole at the time of fuel injection from the injector (61) into the combustion chamber (29) to 300 kPa - 1000 kPa and make the injection velocity 10 m/s - 30 m/s.

The injector (61) is disposed nearer to the cylinder head (23) than to the sub-scavenging port (41b1). The downward directed injection flow (X) before being reflected is directed to the exhaust port (44) and the piston head (26c). After the exhaust port (44) is covered with the piston (26), the injection flow (X) securely strikes the piston head (26c) for heat exchange.

Injection start timing is set so that the exhaust port (44) is covered before the tip of the downward directed injection flow (X) reaches the exhaust port (44). The tip of the downward directed injection flow (X) is shown as (X1). In the case all the downward directed injection flow (X) is made to strike the piston head (26c), the injection start timing is set so that the exhaust port (44) is covered before the tip of rebounded injection flow reaches the exhaust port (44).

As described above, the injector (61) is located according to this invention nearer to the cylinder head (23) than according to the conventional arrangement. As a result, the injection flow travels a longer distance. During the travel, fuel exchanges heat with heated atmosphere in the combustion chamber also before reaching the piston head (26c).

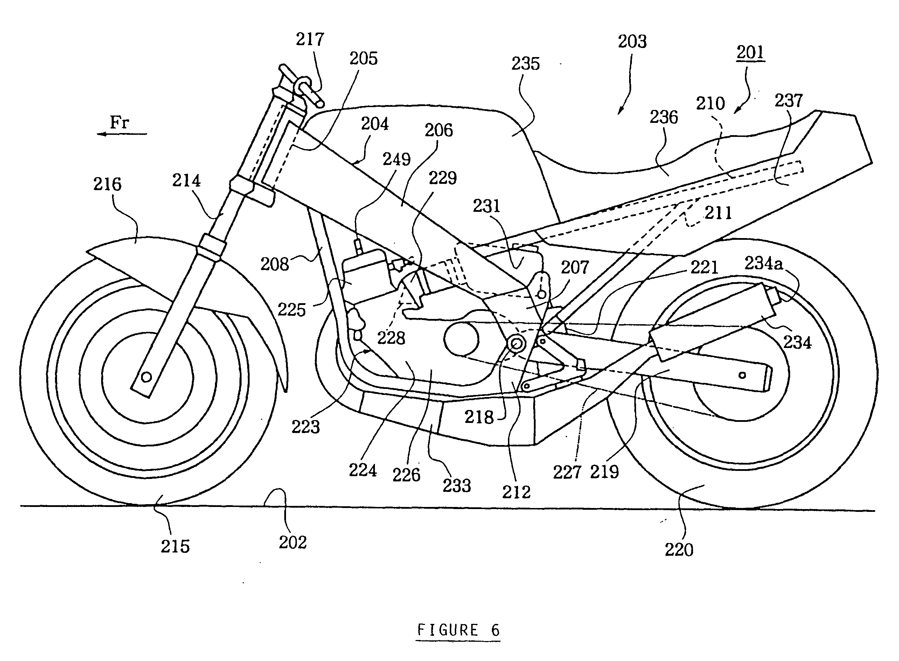

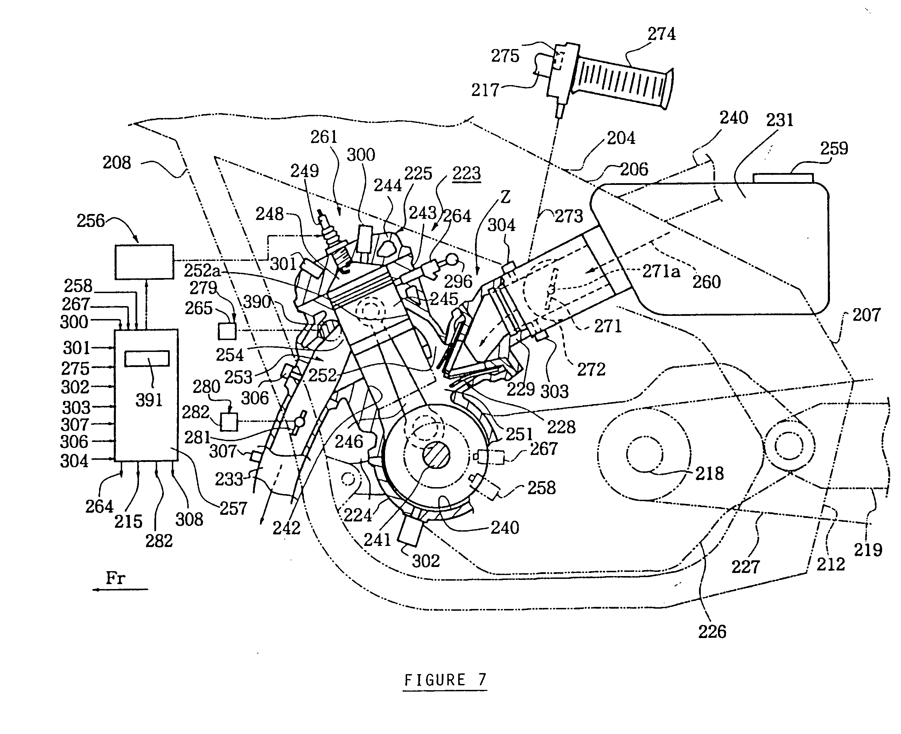

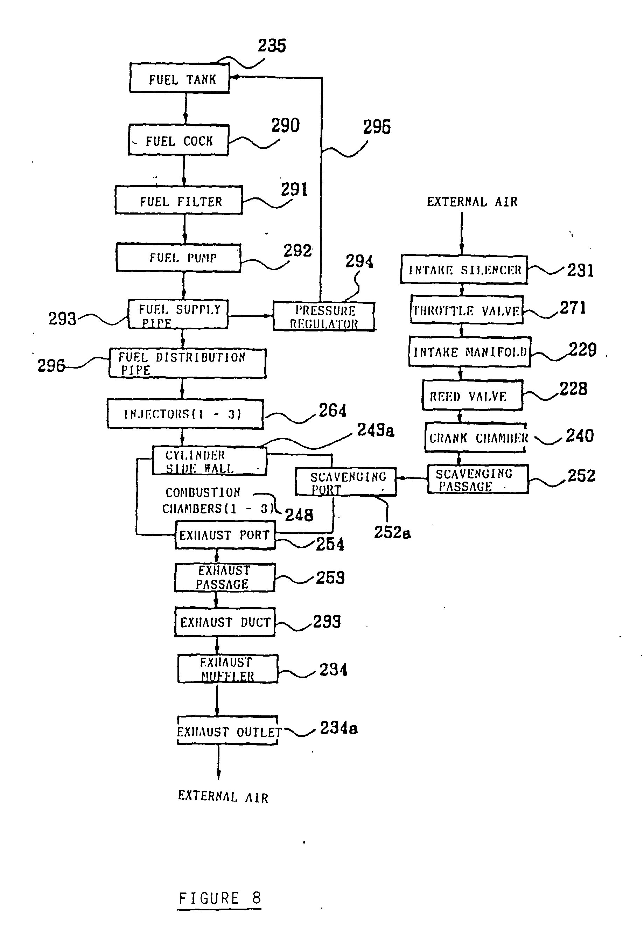

FIGs. 6 through 8 show an embodiment of mounting a fuel injection internal combustion engine on a motorcycle. FIG. 6 shows a schematic configuration of the embodiment of mounting the fuel injection internal combustion engine on a motorcycle. FIG. 7 shows a vertical cross section of the fuel injection internal combustion engine. FIG. 8 is a flow chart of fuel and air of cylinder side wall injection.

Those figures show a motorcycle (201) as an example of a riding type vehicle, with the arrow (Fr) showing the advancing direction. The words right and left used later herein mean the directions as seen in the advancing direction described above. The symbol (202) is the ground on which the motorcycle (201) runs. The motorcycle (201) has a chassis (203) having a chassis frame (204). The chassis frame (204) has at its front end a head pipe (205). From the head pipe (205) extend paired right and left main frames (206) obliquely down backward. From each of the main frames (206) extend seat pillar tubes (207). From the front underside of the main frames (206) extend down tubes (208) with their extension ends connected to the extension ends of the seat pillar tubes (207).

From the rear part of the main frames (206) extend rearwardly and upwardly seat rails (210) supported with paired right and left back stays (211) on the seat pillar tubes (207). The area where the back stays (211) join the seat pillar tubes (207) constitutes a rear arm bracket (212). Freely steerable front forks (214) are supported on the head pipe (205). At the lower ends of the front forks (214) is supported a front wheel (215) with a front fender (216) covering the front wheel (215) from above. The front fender (216) Is secured to a vertically middle positions on the front forks (214). At the top ends of the front forks (214) are attached handlebars (217).

Rear arms (219) are supported for vertical swinging with a pivot shaft (218) on the rear arm brackets (212). A rear wheel (220) is supported at the swinging ends of the rear arms (219), with dampers (221) interposed hetween the seat rails (210) and the rear arms (219). A fuel injection internal combustion engine (223) is disposed in a space surrounded with the main frames (206), seat pillar tubes (207), and the down tubes (208), namely within the chassis frame (204). The engine (223) is of a two cycle type comprising a crankcase (224) and a cylinder (225) projecting up forward from the crankcase (224), and detachably mounted on the chassis frame (204) by means of tightening means. On the back side of the crankcase (224) is connected a power transmission device (226) on the output side of which is connected the rear wheel (220) through a chain transmission mechanism (227).

To the back side of the cylinder (225) is connected reed valve (228), an intake manifold (229), and an intake silencer (231) in that order. The intake manifold (229) is provided with a throttle valve (271) for controlling the intake amount. A throttle pulley (272) attached to a shaft (271a) of the throttle valve (271) is connected through a throttle wire (273) to a throttle grip (274) so that the throttle valve (271) is opened and closed by the operation of the throttle grip (274). The throttle grip (274) is provided on one of the handlebars (217) and has a throttle opening sensor (275).

To the front side of the cylinder (225) is connected one end of an exhaust tube (233) with its other end extending backward near the underside of the down tubes (208) and connected at its rear end to an exhaust muffler (234). Exhaust gas is exhausted from the outlet (234a) of the exhaust muffler (234).

A fuel tank (235) is supported on the main frame (206). A seat (236) is supported on the seat rails (210). Side covers (237) are provided for covering the rear part of the chassis (203). By the operation of the engine (223), the motorcycle (201) is driven forward on the road (202) as the power of the engine (223) is transmitted to the rear wheel (220) through the power transmission device (226), the chain transmission mechanism (227), etc.

The engine (223) has a cylinder (261). A crankshaft (241) Is housed In a crank chamber (240) in the crankcase (224) and supported for free rotation about its axis. The cylinder (225) of the engine (223) comprises a cylinder body (243) having a cylinder bore (242) with its axis generally vertical, and a cylinder head attached to the projecting end of the cylinder body (243). In the cylinder bore (242) is inserted a piston (245) for free axial sliding and connected through a connecting rod (246) to the crankshaft (241).

The space surrounded with the cylinder head (224) and the piston (245) in the cylinder bore (242) becomes the combustion chamber (248) when the piston (245) approaches the cylinder head (224) to a certain extent. The cylinder head (244) is provided with a spark plug (249) with its discharging portion facing the combustion chamber (248). In the back upper area of the crankcase (224) is formed an intake port (251) connected to a reed valve (228). The cylinder body (243) around the cylinder bore (242) is provided with a scavenging passage (252) making connection between the crank chamber (240) and the combustion chamber (248). Part of the scavenging passage (252) which is open to the combustion chamber (248) is a scavenging port (252a). An exhaust port (254) is formed in the front part of the cylinder body (243) so as to make connection between the combustion chamber (248) and an exhaust passage (253) in the upstream end which is the front end of the exhaust tube (233).

The engine (223) is provided with a injector (264) corresponding to the cylinder 261. The injector (264) is detachably attached to the cylinder side wall (243a) of the cylinder body (243) to inject fuel supplied from the fuel tank (235) from the cylinder side wall (243a) into the combustion chamber (248). Since the structure, mounting position, injection direction, and injection timing of the injector (264) are the same with those of the previous embodiment, descriptions on them are omitted.

A fuel cock (290) is provided under the fuel tank (235). To the fuel cock (290) are connected a fuel filter (291), a fuel supply pump (292), and a fuel supply pipe (293) in that order. Fuel is supplied from the fuel supply pipe (293) through a fuel distribution pipe (296) to the injector (264). The fuel distribution pipe (293) is provided with a pressure regulator (294) for regulating the pressure of fuel supplied to the injector (264). Surplus fuel is returned through the pressure regulator (294), and a return fuel passage (295). A space (Z) behind the cylinder bodies (243), above the intake manifold (229), and below the fuel tank (235) is utilized to lay out the fuel distribution pipe (296) and the injector (264) compactly while avoiding interference with other components and protecting the fuel distribution pipe (296).

An ignition plug (249) is electrically connected to an electronic ignition circuit (256) connected to an electronic engine control device (257). A crank angle sensor (258) is also provided for detecting the rotation angle of the crankshaft (241) and also connected to the electronic engine control device (257).

During operation of the engine (223), when the piston (245) moves from the bottom dead center on the crankshaft (241) side (shown with phantom lines in FIG. 8) toward the combustion chamber (248), the piston (248) covers in succession the scavenging port (252a) and the exhaust port (254) in that order. When the piston (245) moves toward the combustion chamber (248) as described above, the pressure in the crank chamber (240) becomes negative. Then, the external air (260) is drawn through the intake silencer (231) as an intake air (260).

Next, the intake air (260) flows through the intake manifold (229) and the reed valve (228) and taken into the crank chamber (240). This process is the "intake stroke."

When the piston (245) moves further toward the combustion chamber (248) after the scavenging port (252a) and the exhaust port (254) are covered, mixture formed with fuel already injected with the injector (264) into the combustion chamber (248) and/or fuel injected during this process is compressed. This process is the "compression stroke."

At a required crank angle, namely a required ignition timing, detected with the crank angle sensor (258) immediately before the piston (245) reaches the top dead center, the discharging portion of the ignition plug (249) discharges according to the output signal from the ignition circuit (256) controlled with the engine control device (257). Then, the mixture is ignited and burned, and the burned gas expands. As a result, the piston (245) after passing the top dead center is pushed back toward the crank chamber (240). This process is the "combustion stroke."

As the piston (245) moves toward the crank chamber (240), the air taken into the crank chamber (240) is pre-compressed. At this time, the reed valve (228) is closed by the pressure in the crank chamber (240).

In the middle of the movement of the piston (245) toward the crank chamber (240), first the exhaust port (254) is uncovered. Then, burned product of the mixture or exhaust gas is exhausted from the combustion chamber (248) through the exhaust port (254). This process is the "exhaust stroke." The exhaust gas is exhausted outside through the exhaust passage (253) in the exhaust tube (233).

As the piston (245) moves toward the crank chamber (240), the exhaust port (254) is opened and then the scavenging port (252a) is opened. Then the air pre-compressed in the crank chamber (240) flows through the scavenging passage (252) into the combustion chamber (248) and pushes out part of burned gas remaining in the combustion chamber (248) to the scavenging port (254) and at the same time the combustion chamber (248) is filled with air. This process is the "scavenging stroke." The "scavenging stroke" continues as the piston (245) returns to the bottom dead center, moves up again, and immediately before it covers the exhaust port (252a). Fuel is injected from the injector (264) during the period from the middle of the "scavenging stroke" to the beginning of the "compression stroke" when the piston (245) covers the injector (264).

From the state described above, the piston (245) moves again toward the combustion chamber (248) and the processes are repeated to rotate the crankshaft (241). Through the crankshaft (241) the engine (223) outputs power which is transmitted through the power transmission device (226) and the chain transmission mechanism (227) to the rear wheel (220).

An exhaust timing adjustment device (279) is provided for improving the engine performance by adjusting the exhaust timing when exhaust gas is exhausted from the combustion chamber (248) to the exhaust port (254). The exhaust timing adjustment device (279) has an exhaust timing adjustment valve (390) which opens and closes the upper opening of the exhaust port (254) so that the edge of the upper opening of the exhaust port (254) is variable. The exhaust timing adjustment valve (390) is actuated with an actuator (265) such as a servomotor, etc. which is connected to the engine control device (257).

An engine speed sensor (267) for detecting the revolution of the engine (223) or the crankshaft (241) is connected to the engine control device (257).

When the engine (223) speed is determined by the detection signal of the engine speed sensor (267) to be in the high speed range, the exhaust timing adjustment valve (390) is opened by the operation of the actuator (265) controlled with the engine control device (257), and the upper opening edge of the exhaust port (254) is positioned upward. Thus the exhaust timing is advanced to improve the engine performance in the high speed range.

When the engine (223) speed is determined to be in the middle or low speed range on the other hand, the actuator (265) closes the exhaust timing adjustment valve (390) so that the upper opening edge of the exhaust port (254) is positioned downward. Thus the exhaust timing is delayed to improve the engine performance in the middle or low speed range. While the exhaust timing is delayed at low engine speed, the injection timing may be advanced accordingly and more secure pre-mixture combustion is possible.

In other words, if the injection timing is delayed at low speeds according to the reduction in the piston speed so that fuel does not flow out from the exhaust port (254), injection flow does not spread widely when it strikes the piston head. However, fuel does not flow out even if the injection start timing is advanced commensurate with the downward shift of the upper opening edge of the exhaust port (254). By the advanced timing fuel is made to strike a wide area on the piston head to improve heat exchange with the piston (245).

The engine (223) is provided with an exhaust valve opening adjustment device (280) with an exhaust valve (281) for adjusting the opening of the exhaust passage (253) and restricting the flow rate of the exhaust gas flowing through the exhaust passage (253) at low loads or low speeds. The exhaust valve (281) is actuated with an actuator (282) such as a servomotor connected to a control device (391).

The engine (223) is provided with a combustion chamber pressure sensor (300) and a knock sensor (301). The combustion chamber pressure sensor (300) delays the ignition timing when the combustion chamber pressure exceeds a predetermined value. When knocking occurs, the knocking sensor (301) detects vibration and causes to delay the ignition timing and prevents knocking, and when the knocking disappears the ignition timing is returned to the original timing.

The engine (223) is also provided with a crank chamber pressure sensor (302), an intake pipe pressure sensor (303), intake pipe temperature sensor (304), an exhaust pipe pressure sensor (306), and an exhaust pipe temperature sensor (307). According to information from those sensors, the engine control device (257) controls the ignition timing, injection timing, injection period, and an oil supply device (308).

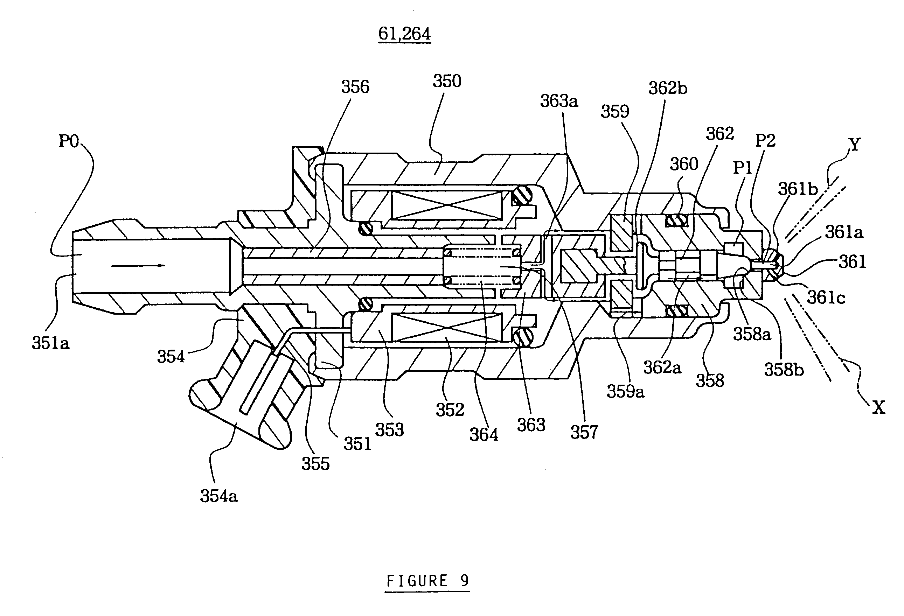

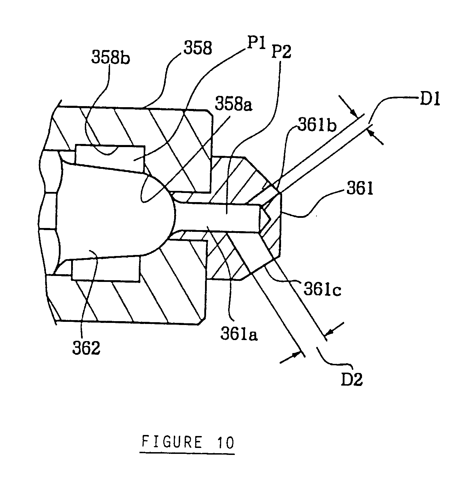

Next, the structure of the injector for use in embodiments of FIGs. 1-8 will be described. FIG. 9 is a cross-sectional view of the injector. FIG. 10 is a cross-sectional view of the front end of the injector.

The injector (61, 264) has an injector housing (350). A cap body (351) is fit on the rear and of the injector housing (350). A core (353) with a coil (352) is disposed in the injector housing (350). The cap body (351) is covered with a resin-made cap (354). A connector (354a) of the cap (354) is provided with a lead wire (355) connected to the core (353). The lead wire (355) is connected through the connector (354a) to a drive power source side. A pipe (356) is inserted into the cap body (351). Fuel supplied from a fuel inlet (351a) of the cap body (351) is led through the pipe (356) into a fuel chamber (357) in the injector housing (350).

A needle housing (358) is fit in the front end of the injector housing (350) with a needle stopper (359) interposed in between, and sealed with a seal member (360). A nozzle (361) is fit in the front end of the needle housing (358) and formed with an injection passage (361a). An upward directed injection hole (361b) and a downward directed injection hole (361c) are formed and connected to the injection passage (361a). The diameter (D1) of the upward directed injection hole (361b) is made smaller than the diameter (D2) of the downward directed injection hole (361c) so that the fuel injection amount from the downward directed injection hole (361c) is greater than that from the upward directed injection hole (361b).

A needle (362) is movably disposed in the needle housing (358). A movable piece (363) is fixed to the needle (362). The needle (362) is formed with a fuel passage (362a) by cutting. The needle stopper (359) is formed with a fuel passage (359a) by cutting. The movable piece (363) is also formed with a fuel passage (363a). A compression spring (364) is interposed hetween the cap body (351) and the movable piece (363) to force the needle (362) through the movable piece (363) in the direction to close a valve seat (358a) of the needle housing (358) so that an injection passage (361a) is closed and fuel cannot be injected. When a coil (352) on a core (353) is energized, the movable piece (363) is attracted against the compression spring force by electromagnetic force caused with the coil (352) to open the valve seat and the injection passage (361a), and inject fuel. At this time, a stopper flange (362b) formed on the needle (362) comes in contact with the needle stopper (359) to restrict the position of the needle (362).

Since the pressure on the injector (61, 264) is adjusted with an adjustment valve at 600 - 650 kilopascal, when the needle (362) presses the valve seat (358a), the fuel pressure in the fuel storage (358b) in the needle housing (358) Is also 600 - 650 kilopascal. The farther is the needle (362) from the valve seat (358a), the greater becomes the flow velocity through the injector (61. 264), and the pressure in the fuel storage (358b) lowers. Since the fuel pressure further lowers as the fuel flows from the fuel storage (358b) through the space between the needle (362) and the valve seat (358a), the fuel pressure in the injection passage (361a) is about a half of that in the fuel storage (358b).

The pressure (P2) in the injection passage (361a) is the pressure in the upstream portion of the injection holes (361b) and (361c) when fuel is injected from the injector (61, 264) into the combustion chamber (29). The pressure (P2) is set to 300 kPa - 1000 kPa at the maximum opening of the needle (362). This pressure makes it possible to set the injection velocity to 10 m/s - 30 m/s.

In other words, with the differential pressure 300 kPa - 1000 kPa between the injection passage (361a), fuel is injected into the combustion chamber (29, 248). Pressure drop or pressure regulator valve is set so that the flow velocity is 10 m/s - 39 m/s, preferably about 20 m/s.

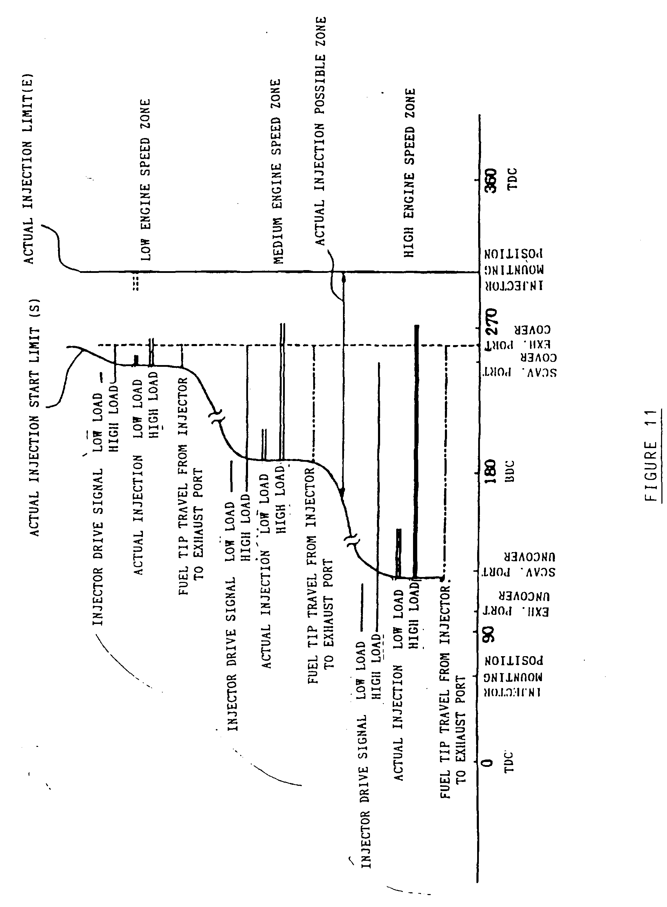

Next, the fuel injection timing of the injector will be described. FIG. 11 is a fuel injection timing chart.

In this fuel injection timing chart, the horizontal axis indicates the crank angles corresponding to the opening and closing of the exhaust port, opening and closing of the scavenging port, and the injector attachment position. The vertical axis indicates the engine speed as the low, medium, and high engine speed zones.

The injector drive signals are indicated with solid lines, with the upper line showing the signal for the low load while the lower line for the high load. The actual fuel injection from the injector is shown with a double line, with the upper line for the low load and the lower line for the high load. The duration for the injected fuel traveling from the injector to the exhaust port is shown with a dash-and-double-dotted line. There is an actuation delay between the injector drive signal and actual actuation of the injector.

The fuel injection timing of the injector varies with the engine speed zones. The actual injection start limit is shown with the curve (S) and the actual injection limit is shown with the straight line (E). The actual available injection range is set with the actual injection start limit curve (S) and the actual injection limit line (E).

In the figure, the length of the dash-and-double-dotted line represents the duration (in crank angle) for the injected fuel traveling from the injector across the combustion chamber to the exhaust port in each of the engine speed zones. Blow-by is prevented by starting injection at a time before the exhaust port closure by the fuel travel time. Such a travel duration is shown with the dash-and-double-dotted line in the figure. The actual injection start limit curve (S) is produced by connecting. the injection start timing capable of preventing the blow-by. When the piston reaches the injector mounting position, the injector is covered with the piston. That timing is the actual infection limit (E) after which fuel, even if injected, cannot reach the combustion chamber. By the way, the lower the injection speed, the longer becomes the travel time. The nearer is the piston to the exhaust port, the shorter becomes the travel time. When the travel time is the same, concerning the travel period with respect to the crank angle, the lower the engine speed, relatively the shorter the travel period. The longer the travel time, the longer becomes the period from the actual injection start limit to the actual injection limit, and the amount of fuel which can be injected for that period can be increased accordingly. In this embodiment, the injection speed is set to 10 - 30 m/s so that sufficient amount of fuel may be supplied even at high loads.

This embodiment is arranged so that the actual fuel injection is started at the actual injection start limit (S) and the actual fuel injection is stopped when the required fuel injection amount is reached for all the load range and all the engine speed zones. Therefore, the injection is carried out prior to the ignition made in the vicinity of the top dead center (TDC) and more uniform mixture is formed. By the way, since the required fuel injection amount increases at high loads, it is arranged that the injection continues after the exhaust port is covered. It may also be arranged that at low loads and low speeds or at the starting time, the actual injection start time is delayed and that the actual injection is finished by the time of the actual injection limit (E). The more the actual injection start time is delayed, the more amount of thick mixture which has not been diffused completely remains around the ignition plug. Even with the premixture combustion in which mixture thoroughly mixed by the heat exchange with the piston head is present in the combustion chamber at the time of ignition, almost stratified combustion is possible and stability at low speeds and ease of starting are improved. Such a situation is shown with a double broken line in the figure.

As described above, the injector is arranged as follows: At high speeds, injection is started after the exhaust port is uncovered by the descending piston, and stopped after the ascending piston moves for a specified crank angle after the exhaust port is covered with the piston. At low speeds, the injection is started after the piston starts to ascend and before the exhaust port is covered, and stopped after the ascending piston moves for a specified crank angle after the exhaust port is covered with the piston. Thus, required amount of fuel at high and low speeds is injected with a small number of injectors. The specified crank angle is set at an angle after the exhaust port is covered with the piston and before the injector is completely covered or until the injector is completely covered. Thus, the specified crank angle is made a reference simply and securely.

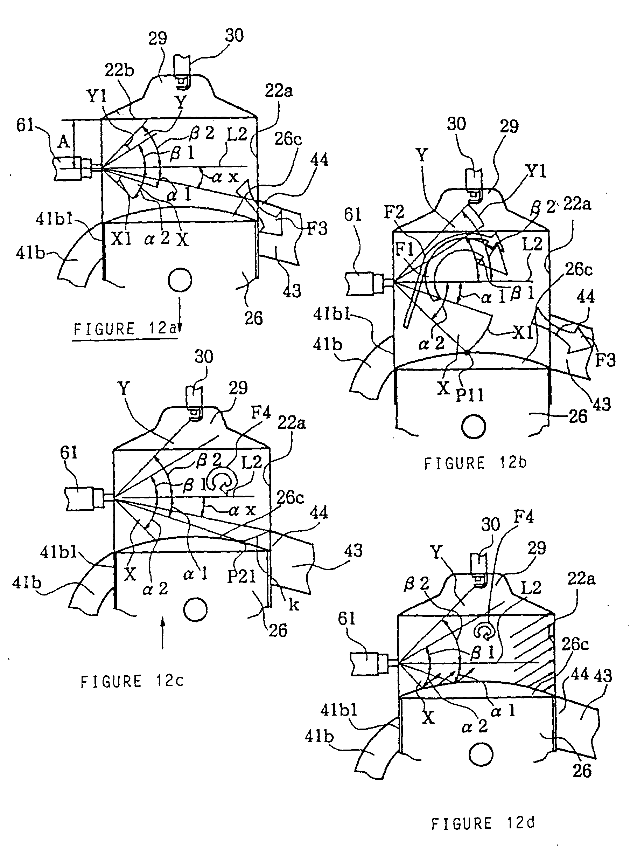

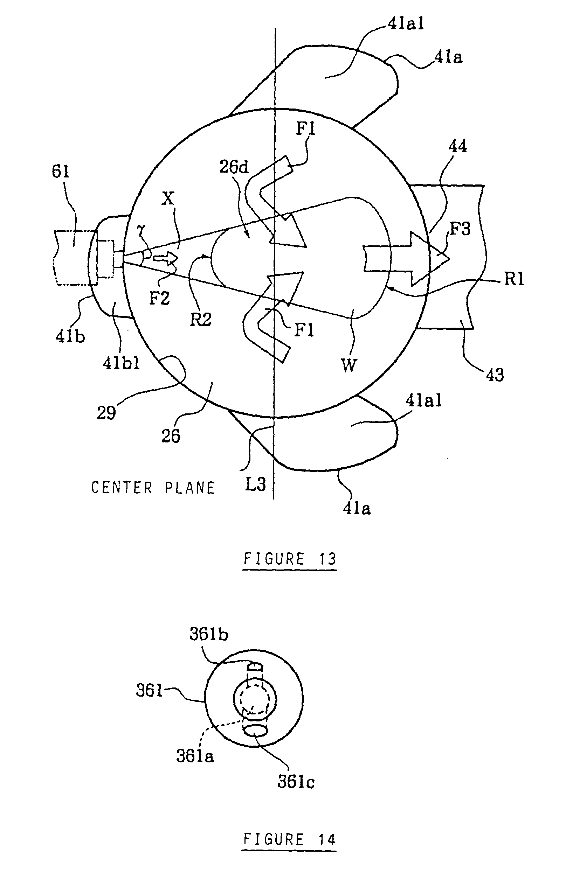

Next, the fuel injection with the embodiment injector shown in FIGs. 1 through 5 will be described in reference to FIGs. 12 through 14. The injection with the embodiment injector shown in FIGs. 6 through 8 is similar to the injection with the injector shown in FIGS. 1 through 5. FIG. 12 shows a schematic cross section of fuel injection with an injector. FIG. 13 is a schematic plan view of the fuel injection with the injector. FIG. 14 shows the position and size of the injection hole of the injector.

The mounting conditions of the injector (61) are shown with the embodiment shown in FIGs. 1 through 5. The structure of the injector (61) is shown in FIGs. 11 and 12, but not limited to it.

In FIG. 12, the angles of the downward directed injection flow (X) of the injector (61) are indicated with (α1) and (α2) relative to the horizontal plane (L2). The plane (L2) is actually vertical in the embodiment shown in FIGs. 1 through 5 because the cylinder bore (25) of the cylinder body (22) extends in the horizontal direction. On the other hand, the plane (L2) is actually horizontal in the embodiment shown in FIGs. 6 through 8 because the cylinder bore of the cylinder body (243) extends in the vertical direction. The angles (α1) and (α2) are set greater than the angle (αx) between the horizontal plane (L2) and a line stretched between the injection hole of the injector (61) and the upper edge of the exhaust port.

The angles of the upward directed injection flow (Y) are Indicated with (β1) and (β2) relative to the horizontal plane (L2). The front end surface of the downward directed injection flow (X) is indicated as (X1) and the front end surface of the upward directed injection flow (Y) is indicated as (Y1).

In the state shown in FIG. 12(a), fuel injection from the injector (61) is started at a high speed while the piston (26) is descending from the top dead center toward the bottom dead center. In the state shown in FIG. 12(b), the piston after reaching the bottom dead center has changed its moving direction and is ascending when the front end surface (X1) reaches and strikes the piston head (26c) at the point (P11). After that, injection flow of angles smaller than (α2) reaches and strikes the piston head (26c) and changes its direction in succession.

In the state shown in FIG. 12(c), part of the injection flow (X), at the uppermost boundary angle (α1) strikes the piston head (26c) while the piston, (26) is ascending toward the top dead center. The travel distance of part of the injection flow (X) at the uppermost boundary angle (α1) from the point (P21) to the cylinder side wall (22a) in the reflecting direction is (k). In the state shown in FIG. 12 (d), the exhaust port (44) is covered before the earliest of part of the injection flow which has reached and struck the piston head (26c) reaches the cylinder side wall (22a) or the exhaust port (44).

The injection start timing and the fuel injection angles (α1) and (α2) are set according to the piston speed (crank radius, engine speed), the distance (A) from the cylinder top end (22b) to the injector mounting position, and the injection flow velocity, so that the exhaust port (44) is covered with the piston (26) whenever the injection flow (X) reaches the cylinder side wall (22a) on the opposite side.

When the piston (26) is descending at high speeds, the fuel injection is started while the exhaust port (44) is still open. The lower becomes the speed, the more delayed is the fuel injection start. Therefore, no blowby of the front end of the injection flow (X) into the exhaust port (44) occurs.

The slower is made the injection flow velocity, the earlier may be made the injection start. In this embodiment, the velocity of the Injection flow (X) is set to 10 m/s - 30 m/s.

Either in the case the injection flow is directed to the exhaust port (44) or in the case it is made to strike the piston head (26c), since the exhaust port (44) is covered with the piston (26) before the injection flow reaches the exhaust port (44), no fuel blowby occurs through the exhaust port (44).

Furthermore, if the injection start timing is delayed, injection flow velocity is reduced, or the cylinder bore is increased, the fuel injection angle (α1) may be further reduced. For instance, the fuel injection angle (α1) may be set to 0° namely horizontal.

By directing the upward injection flow (Y) to the spark plug (30) and delaying the fuel injection start timing at low speeds. rich mixture produced around the piston (26) and at the piston head (26c) may be ignited before they are diffused. There is a lean mixture between the piston circumference and the piston head. Thus, a slow combustion is possible in which fire surface advances slowly like a stratified combustion. As a result, stability is improved. By not directing to the piston (26) circumference but upward only, rich mixture may be produced sufficiently in both upper and lower parts of the combustion chamber (29). As a result. pre-mixing is carried out securely through the diffusion of mixture by remaining swirl after scavenging at medium and high speeds.

The injection flow (X) after striking the piston (26) changes its direction toward the upper part of the cylinder. In FIG. 12(b), (F3) is the exhaust flow. The main scavenging flows (F1) come from the main scavenging ports (41a1) on both sides, turn around and go to the exhaust port (44). The sub-scavenging flow (F2) comes from the sub-scavenging port (41b1). The injection flows (X) and (Y), even if they are disturbed by the main scavenging flows (F1) and the sub-scavenging flow (F2), are not made to reach the exhaust port (44) earlier. As a result, blowby is prevented. A tandem flow (F4) shown in FIGs. 12(c) and 12(d) remains in the combustion chamber (29) and contributes to form uniform mixture.

As shown In FIG. 13, the injector (61) is disposed on the half of the cylinder side wall (22a) opposite the exhaust port (44). That is to say, the injector (61) is disposed on the same side as the sub-scavenging port (41b1) of the center plane (L3). As shown in FIG. 14, the injector (61) is provided with an injection passage (361a), and an upward directed injection hole (361b) and a downward directed injection hole (361c) respectively located above and below the injection passage (361a). The upward directed injection hole (361b) and the downward directed injection hole (361c) have circular cross sections, with the downward directed injection hole (361c) having a larger diameter than that of the upward directed injection hole (361b). As a result, fuel amount of the injection flow (X) directed to the piston head (26c) is greater than that of the injection flow (Y) directed upward of the injector (61). Therefore, combustion heat stagnates on the piston head (26c) and makes the piston head (2Gc) a hot spot where vaporization of fuel of the injection flow directed to the piston head (26c) is more securely accelerated.

The downward directed injection hole (361c) has a circular cross section. In the plan view of FIG. 13, the angle (γ) of the injection flow (X) Is set by |α2 - α1|. The area where the injection flow (X) strikes the piston head (26c) is indicated with (W). All the injection flow (X) directed to the piston head (26c) strikes the piston head (26c) and vaporization of fuel of the injection flow (X) directed to the piston head (26c) is more securely accelerated.

The front end (R1) and rear end (R2) of the striking area (W) move toward the injector (61) as the piston (26) ascends,

By the way, injection holes (361b) and (361c) may not have a circular cross section.

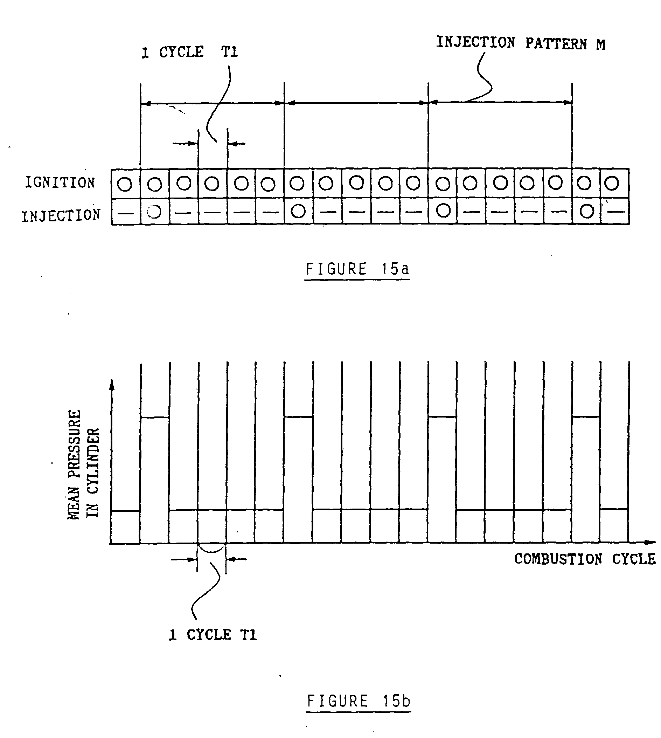

FIG. 15 shows an injection timing of the two cycle spark ignition internal combustion engine at low load in low speed zone. While the following description is on the injection timing at low load in low speed zone by way of the embodiment shown in FIGs. 1 through 5, the injection timing of the embodiment shown in FIGs. 6 through 8 at low load in low speed zone is the same. As described before, with the two cycle spark ignition internal combustion engine, an injector (61) for supplying fuel, a scavenging ports (41a1, 41b1) for supplying fresh air, and an exhaust port (44) for exhausting exhaust gas are disposed on a combustion chamber constituting wall (22a); an ignition plug (30) is disposed in a cylinder head (23), the exhaust port (44) is uncovered after ignition and combustion process, followed by uncovering the scavenging ports (41a1, 41b1) to start gas exchange, both ports are covered to end gas exchange, fuel is injected from the injector (61) into the combustion chamber (29) during or after the gas exchange to produce mixture in the combustion chamber (29), and combustion is started with a spark produced with the ignition plug (30).

FIG. 15(a) shows ignition and injection timings. FIG. 15(b) shows mean pressure in the cylinder (16) which rises in response to the injection timing. In this embodiment, assuming one cycle as the period (T1) from opening and closing to the next opening of the exhaust port (44), it is constituted that injection is stopped at least for one cycle after an injection. Since misfire is made without supplying fuel, blowby at the time of misfire is prevented. Furthermore, amount of residual exhaust gas is reduced by gas exchange at the time of misfire.

Since it is constituted to make intermittent fuel supply possible and stop injection for specified four cycles to reduce or stop fuel supply for the period of the specified number of cycles, amount of residual exhaust gas is securely reduced to securely ignite fuel whenever it is injected.

Since it is also constituted to inject only for the specified cycles and one injection pattern comprising the specified number of cycles is continuously carried out regularly, revolution of the internal combustion engine is made regular. As a result, problems such as adverse effect on the load and strong vibration of supporting members of drive system from the engine to the load are prevented.

Since this embodiment is constituted to carry out injection at every cycle (T1) in the high speed zone when the engine speed is not less than a specified value or in the high load zone, a large output may be obtained in a stabilized manner.

The injection is carried out, as shown in FIG. 11, at the crank angle after the piston (26, 245) passing the injector mounting position and before reaching the top dead center, or at low speeds, at or immediately after the top dead center.

Alternatively, it may be arranged as shown in FIG. 3 that the injector (500) is disposed to face the scavenging passage (41b), and fuel injection is made at every cycle at high speeds and/or high loads into the scavenging passage (41b), or only when the scavenging port (41b1) is uncovered at low speeds into the scavenging passage (41b).

The reason is that the following points are the same with other embodiments: Fuel injected to the scavenging passage (41b) travels with the scavenging flow and is supplied from the scavenging port (41b1) to the combustion chamber without flowing back toward the crank chamber (19a). Scavenging and exhaust are not made with fresh air containing fuel which has flowed back toward the crank chamber (19a). Fuel consumption may be reduced. Amount of residual gas in the injection cycle is securely reduced. Here, the injector (500) may be disposed to face the scavenging passage (41a) as a matter of course.

Alternatively, unlike in the above embodiment in which sparks are produced with the ignition plug (30, 249) in both cycles, it may be arranged that spark is not produced in the misfire cycle in which not combustion occurs because fuel is not injected.

As described above, at low speeds after one injection at least one injection of the next cycle is interrupted, which one cycle being assumed from the uncovering and covering to the next opening of the exhaust port, so that fuel injection is made irregular, misfire is caused to occur while fuel supply is stopped, and blowby at the time of misfire is prevented. Residual exhaust gas amount is reduced.

Further, since injection may be stopped for a specified number of cycles after an injection, fuel supply is reduced or stopped for the specified number of cycles to securely reduce the amount of residual exhaust gas and make it possible to start combustion whenever fuel is injected and ignited.

In addition , since one injection pattern comprising a specified number of cycles only in which fuel is injected is made to occur continuously, the injection pattern continues regularly to make the revolution of the internal combustion engine regular. As a result, problems such as adverse effect on the load and strong vibration of supporting members of drive system from the engine to the load are prevented.

Still further, since injection may be made at every cycle in high speed zone where engine speed is not less than a specified value and/or high load zone, a large output may be obtained in a stabilized manner.

## Claims

1. Internal combustion engine (10) of the two-stroke cycle type comprising at least one cylinder (16) covered with a cylinder head (23) and accommodating a slidably reciprocatable piston (26) connected via a connecting rod (27) to a crankshaft (20) which is located in a crank chamber (19a), whereas said cylinder (16), said piston (26) and said cylinder head (23) define a combustion chamber (29), further a scavenging passage (41), an exhaust passage (43), and a fuel injection device (61) for injecting fuel (59) into said cylinder (16), a control device (73) adapted to control the operation of said fuel injection device (61) such that at least during a low load range of said engine (10) injection of fuel in each single cylinder is interrupted at least during one revolution of said crankshaft (20), said piston (26; 245) comprises at least one ring groove (26a, 26b) for accommodating at least one piston ring (521, 522), **characterized in that** said fuel injector (61; 264) is located within a cylinder side wall (22a; 243a) at a first distance A to a top end (22b) of a cylinder body (22; 243) and **in that** the following inequation is fulfilled: RS < A < 0.3L, wherein RS is a second distance between said top end (22b) of said cylinder body (22, 243) and the lower end of said ring groove (26a, 26b) of said piston (26; 245) when it is at the top dead center position and L is a third distance between said top end (22b) of said cylinder body (22; 243) and the top circumference of said piston (26; 245) when it is in the bottom dead center position, wherein the fuel injection is performed by an upwardly directed injection hole (361b) and a single downwardly directed injection hole (361c), the upwardly directed hole (361b) being smaller than the downwardly directed injection hole (361c).

2. Internal combustion engine according to claim 1, **characterized in that** said injector (61; 264) is an electromagnetic injector.

3. Internal combustion engine according to claim 1 or 2, **characterized by** an engine control device (73; 257) for controlling said injector (61; 264) on the basis of detected engine operating conditions.

4. Internal combustion engine according to claim 3, **characterized in that** said engine operating conditions is one or a combination of a crank angle, a crankcase inside pressure, a cylinder inside pressure, knocking of the engine, intake air temperature, a throttle opening, an intake pressure, a cylinder temperature, an atmospheric pressure, a coolant temperature and an engine speed.

5. Internal combustion engine according to at least one of the preceding claims 1 to 4, comprising at least one exhaust port (44; 254) and at least one scavenging port (41b1) opposing each other, **characterized in that** a fourth distance ES between said top end (22b) of said cylinder body (22; 243) and said exhaust port (44; 254) fulfils the following inequation:$\text{0.35 ES < A < 0.65 ES.}$

6. Internal combustion engine according to claim 5, **characterized in that** said injector (61; 264) is located opposite to said exhaust port (44; 254) or opposite said scavenging port (41b1).

7. Internal combustion engine according to at least one of the preceding claims 1 to 6, **characterized in that** the angles (α1, α2) of the injection flow (X) from the lower injection hole (361 c) with respect to a plane (L2) transverse to said cylinder axis are larger than an angle (αx) between said transverse plane (L2) and a line connecting said injector (61; 264) with the upper edge of said exhaust port (44; 254) adjacent said cylinder head (23; 224).

8. Internal combustion engine according to at least one of the preceding claims 1 to 7, **characterized in that** for at least two consecutive revolutions of said crankshaft (20) fuel ignition is interruptable.

9. Internal combustion engine according to at least one of the preceding claims 1 to 8, **characterized in that** said control device (73) is adapted to control said fuel injection device (61) such that said fuel injection is interruptable according to a pattern.

10. Internal combustion engine according to at least one of the preceding claims 1 to 9, **characterized in that** said control device (73) is adapted to control said fuel injection device (61) such that fuel (59) is injectable during every revolution of the crankshaft (20) during a high revolution zone where the revolution of said crankshaft is not less than a predeterminable value, and/or during a high load zone.

## Patentansprüche

1. Brennkraftmaschine (10) vom Zweitakt- Typ mit zumindest einem Zylinder (16), abgedeckt mit einem Zylinderkopf (23), und der einen gleitbar hin- und hergehenden Kolben (26) aufnimmt, verbunden über eine Pleuelstange (27) mit einer Kurbelwelle (20), die in einer Kurbelkammer (19a) angeordnet ist, wobei der Zylinder (16), der Kolben (26) und der Zylinderkopf (23) eine Brennkammer (29) begrenzen, außerdem einen Spülkanal (41), einen Auslaßkanal (43) und eine Kraftstoffeinspritzvorrichtung (61) zum Einspritzen von Kraftstoff (59) in den Zylinder (16), eine Steuervorrichtung (73), vorgesehen um den Betrieb der Kraftstoffeinspritzvorrichtung (61) zu steuern, derart, daß wenigstens während eines niedrigen Lastbereiches des Motors (10) die Einspritzung des Kraftstoffes in jeden einzelnen Zylinder zumindest während einer Umdrehung der Kurbelwelle (20) unterbrochen wird, wobei der Kolben (26; 245) zumindest eine Ringnut (26a, 26b) zum Aufnehmen von zumindest einem Kolbenring (521, 522) aufweist, **dadurch gekennzeichnet, daß** der Kraftstoffeinspritzer (61; 264) angeordnet ist innerhalb einer Zylinderseitenwand (22a; 243a) in einem Abstand A zu einem oberen Ende (22b) eines Zylinderkörpers (22; 243) angeordnet ist, und **daß** dadurch die folgende Ungleichung erfüllt ist: RS < A < 0.3L, wobei RS ein zweiter Abstand zwischen dem oberen Ende (22b) des Zylinderkörpers (22, 243) und dem unteren Ende der Ringnut (26a, 26b) des Kolbens (26; 245) ist, wenn er in der oberen Totpunktposition ist und L ein dritter Abstand ist zwischen dem oberen Ende (22b) des Zylinderkörpers (22; 243) und dem oberen Umfang des Kolbens (26; 245), wenn er in der unteren Totpunktposition ist, wobei die Kraftstoffeinspritzung ausgeführt wird durch eine nach oben gerichtete Einspritzbohrung (361b) und eine einzige, nach unten gerichtete Einspritzbohrung (361c), wobei die nach oben gerichtete Bohrung (361b) kleiner als die nach unten gerichtete Einspritzbohrung (361c) ist.

2. Brennkraftmaschine nach Anspruch 1, **dadurch gekennzeichnet, daß** der Einspritzer (61; 264) ein elektromagnetischer Einspritzer ist.

3. Brennkraftmaschine nach Anspruch 1 oder 2, **gekennzeichnet durch** eine Motorsteuervorrichtung (73; 257) zum Steuern des Einspritzers (61; 264) auf der Grundlage der erfaßten Motorbetriebsbedingungen.

4. Brennkraftmaschine nach Anspruch 3, **dadurch gekennzeichnet, daß** die Motorbetriebsbedingungen eine oder eine Kombination von einem Kurbelwinkel, einem Kurbelgehäuseinnendruck, einem Zylinderinnendruck, Klopfen des Motors, Einlaßlufttemperatur einer Drosselöffnung, ein Einlaßdruck, eine Zylindertemperatur, ein Atmosphärendruck, eine Kühlmitteltemperatur oder einer Motordrehzahl ist.

5. Brennkraftmaschine nach zumindest einem der vorhergehenden Ansprüche 1 bis 4, aufweisend zumindest eine Auslaßöffnung (44; 254) und zumindest eine Spülöffnung (41b1), die einander gegenüberliegen, **dadurch gekennzeichnet, daß** ein vierter Abstand ES zwischen dem oberen Ende (22b) des Zylinderkörpers (22; 243) und der Auslaßöffnung (44; 254) die folgende Ungleichung erfüllt:$\text{0.35 ES < A < 0,65 ES}$

6. Brennkraftmaschine nach Anspruch 5, **dadurch gekennzeichnet, daß** der Einspritzer (61; 264) gegenüber der Auslaßöffnung (44; 254) oder gegenüber der Spülöffnung (41b1) angeordnet ist.

7. Brennkraftmaschine nach zumindest einem der vorhergehenden Ansprüche 1 bis 6, **dadurch gekennzeichnet, daß** die Winkel (α1, α2) der Einspritzströmung (X) von der unteren Einspritzbohrung (361c) in Bezug zu einer Ebene (L2) quer zu der Zylinderachse größer sind, als ein Winkel (α X) der Querebene (L2) und einer Linie, die den Einspritzer (61; 264) mit der oberen Kante der Auslaßöffnung (44; 254), benachbart zu dem Zylinderkopf (23; 224), verbindet.

8. Brennkraftmaschine nach zumindest einem der vorhergehenden Ansprüche 1 bis 7, **dadurch gekennzeichnet, daß** für zwei aufeinanderfolgende Umdrehungen der Kurbelwelle (20) die Kraftstoffeinspritzung unterbrochen werden kann.

9. Brennkraftmaschine nach zumindest einem der vorhergehenden Ansprüche 1 bis 8, **dadurch gekennzeichnet, daß** die Steuervorrichtung (73) vorgesehen ist, um die Kraftstoffeinspritzvorrichtung (61) zu steuern, so **daß** die Kraftstoffeinspritzung entsprechend eines Musters unterbrochen werden kann.

10. Brennkraftmaschine nach zumindest einem der vorhergehenden Ansprüche 1 bis 9, **dadurch gekennzeichnet, daß** die Steuervorrichtung (73) vorgesehen ist, um die Kraftstoffeinspritzvorrichtung (61) derart zu steuern, so **daß** Kraftstoff (59) während jeder Umdrehung der Kurbelwelle (20) während eines hohen Umdrehungsbereiches der Kurbelwelle, wo die Umdrehung der Kurbelwelle nicht geringer als ein vorbestimmter Wert ist, eingespritzt werden kann, und/oder während eines Hochlastbereiches eingespritzt werden kann.

## Revendications

1. Moteur à combustion interne (10) de type à deux temps comprenant au moins un cylindre (16) recouvert par une culasse (23) et recevant un piston pouvant glisser en mouvement alternatif (26) connecté par l'intermédiaire d'une bielle (27) à un vilebrequin (20) qui est placé dans une chambre d'embiellage (19a), alors que ledit cylindre (16), ledit piston (26) et ladite culasse (23) définissent une chambre de combustion (29), et de plus un passage de balayage (41), un passage d'échappement (43), et un dispositif d'injection de carburant (61) destiné à injecter un carburant (59) à l'intérieur dudit cylindre (16), un dispositif de commande (73) adapté pour commander le fonctionnement dudit dispositif d'injection de carburant (61), de sorte qu'au moins au cours d'une plage de faible charge dudit moteur (10) l'injection de carburant dans chacun des cylindres est interrompue au moins pendant un tour dudit vilebrequin (20), ledit piston (26 ; 245) comprend au moins une gorge pour segment (26a, 26b) destinée à recevoir au moins un segment de piston (521, 522), **caractérisé en ce que** ledit injecteur de carburant (61 ; 264) est placé à l'intérieur d'une paroi latérale de cylindre (22a ; 243a) à une première distance A d'une extrémité supérieure (22b) d'un corps de cylindre (22 ; 243) et **en ce que** l'inéquation suivante est réalisée : RS < A < 0,3L , dans laquelle RS est une seconde distance entre ladite extrémité supérieure (22b) dudit corps de cylindre (22 ; 243) et l'extrémité inférieure de ladite gorge à segment (26a, 26b) dudit piston (26 ; 245) lorsqu'il est en position de point mort haut, et L est une troisième distance entre ladite extrémité supérieure (22b) dudit corps de cylindre (22 ; 243) et la circonférence supérieure dudit piston (26 ; 245) lorsqu'il est en position de point mort bas, dans lequel l'injection de carburant est réalisée par l'intermédiaire d'un orifice d'injection dirigé vers le haut (361 b) et d'un orifice d'injection unique dirigé vers le bas (361c), l'orifice dirigé vers le haut (361b) étant plus petit que l'orifice d'injection dirigé vers le bas (361c).

2. Moteur à combustion interne selon la revendication 1, **caractérisé en ce que** ledit injecteur (61 ; 264) est un injecteur électromagnétique.

3. Moteur à combustion interne selon la revendication 1 ou la revendication 2, **caractérisé par** un dispositif de commande du moteur (73; 257) destiné à commander ledit injecteur (61 ; 264) sur la base de conditions de fonctionnement du moteur détectées.

4. Moteur à combustion interne selon la revendication 3, **caractérisé en ce que** lesdites conditions de fonctionnement du moteur représentent l'une ou une combinaison d'angle de vilebrequin, de pression interne de carter moteur, de pression interne du cylindre, de cognement du moteur, de température d'admission d'air, d'ouverture du papillon des gaz, de pression à l'admission, de température du cylindre, de pression atmosphérique, de température de liquide de refroidissement et de vitesse de rotation du moteur.

5. Moteur à combustion interne selon au moins l'une des revendications précédentes 1 à 4, comprenant au moins un orifice d'échappement (44 ; 254) et au moins un orifice de balayage (41b1) en opposition l'un à l'autre, **caractérisé en ce qu'**une quatrième distance ES entre ladite extrémité supérieure (22b) dudit corps de cylindre (22 ; 243) et ledit orifice d'échappement (44 ; 254) est conforme à l'inéquation qui suit :$\text{0,35 ES < A < 0,65 ES}$

6. Moteur à combustion interne selon la revendication 5, **caractérisé en ce que** ledit injecteur (61 ; 264) est situé en opposition au dit orifice d'échappement (44 ; 254) ou en opposition au dit orifice de balayage (41b1).

7. Moteur à combustion interne selon au moins l'une des revendications précédentes 1 à 6, **caractérisé en ce que** les angles (α1, α2) du débit d'injection (X) en provenance de l'orifice d'injection inférieur (361c) par rapport à un plan (L2) transversal au dit axe de cylindre sont plus grands qu'un angle (αX) entre ledit plan transversal (L2) et qu'une ligne reliant ledit injecteur (61 ; 264) au bord supérieur dudit orifice d'échappement (44 ; 254) situé à proximité de ladite culasse (23 ; 224).

8. Moteur à combustion interne selon au moins l'une des revendications précédentes 1à 7, **caractérisé en ce que** pour au moins deux tours consécutifs dudit vilebrequin (20) l'allumage du carburant peut être interrompu.

9. Moteur à combustion interne selon au moins l'une des revendications précédentes 1à 8, **caractérisé en ce que** le dispositif de commande (73) est adapté pour commander ledit dispositif d'injection de carburant (61) de telle sorte que ladite injection de carburant peut être interrompue en fonction d'une configuration.

10. Moteur à combustion interne selon au moins l'une des revendications précédentes 1 à 9, **caractérisé en ce que** ledit dispositif de commande (73) est adapté pour commander ledit dispositif d'injection de carburant (61) de telle sorte que le carburant (59) peut être injecté à chaque tour du vilebrequin (20) au cours d'une période de rotation élevée dans laquelle la rotation dudit vilebrequin n'est pas inférieure à une valeur prédéterminée, et / ou au cours d'une période à charge élevée.
